# EUROPEAN PATENT APPLICATION

(11) **EP 2 343 862 A1**
(43) Date of publication of application: **13.07.2011**
(21) Application number: 10250017.0
(22) Date of filing: 07.01.2010
(51) Int. Cl.: H04L 29/06

(54) **Data distribution system and related aspects**

(71) Applicant: British Telecommunications public limited company, London EC1A 7AJ (GB)
(72) Inventor: Wisely, David Roger, London EC1A 7AJ (GB)
(74) Representative: Brinck, Coreena Fiona Anne

(57) **Abstract**

A data distribution system for electronically distributing data usage rights enables control of the use of the electronically distributed encrypted content data by a data using device. The system comprises a distribution means arranged to distribute encrypted content data in association with a content identifier to at least one data using device and a distribution means arranged to provide a data usage right for usage of said encrypted content data, the data usage right data associating said content identifier with a use identifier, and one or more devices, each device comprising: a secure memory; and means arranged to obtain a said data usage right for encrypted data having a content identifier and store said a distributed data usage right in a location of said secure memory; wherein a data using device is configured to decrypt encrypted data after verifying it has stored in its secure memory data comprising a data usage right which associates a content identifier of said encrypted data to be used by the device with a use identifier which is also associated with said data using device.

## Description

The present invention relates to a data distribution system and to related aspects. In particular, but not exclusively, the invention relates to a data distribution system which supports the distribution of usage rights for the data independently of the data for which the usage rights are granted.

Electronic distribution is now widely in use. It enables data whose content comprises text, images, audio and/or video to be distributed to end-users. Data is transferable from server sites to a range of client terminal equipment, for example, set-top television boxes, televisions, mobile telephones, personal digital assistants, portable and personal computers, as well as to other server sites. The term "content" here refers to the data which includes the text, images, audio and/or video that constitutes the published data - for example, the game, music track, video, e-book, picture, etc. More generally, however, "content" can be considered to comprise substantive information or creative material which is viewed or listened to in contrast to its actual or potential manner of presentation. The content is often associated with a copyright and "consuming" the content, for example, by viewing or listening or playing the content work in a legal manner requires the content of the copyright owner to have been obtained. Where electronic distribution occurs and content is consumed without such consent, infringement of copyright may have occurred.

Data such as "content" data typically occupies a relatively large storage volume and often, for example, comprises multi-media data files. The characteristics of such data are such that it is preferable to source the data from a location which enables the data to be swiftly transferred to a machine via which the data can be used. For example, where the content data comprises a film, it may be useful to download the data file providing the film content overnight (optimising the temporal characteristics of an access network connection) or to copy the data file from another device. However, where data files comprising content are retrieved from other users or devices, and/or from any unauthorised source, a problem exists because the terms under which the content data is made available for playback are likely to be broken as retrieval of an unauthorised copy of the content data is in breach of the copyright licence under which the content data has been made available.

It is desirable therefore for a method to distribute content data to be devised which enables the content data to be provided to end users in a form which enables authorised playback no matter from what source the content data is obtained. To use the content data, a usage right has to be obtained for that content data (regardless of whether the right is distributed for no cost or whether the usage is charged for), The invention thus enables the usage of data to be monitored. As the data which provides a usage right is provided in a form which has a low data volume, a data certificate occupies a very low amount of memory), it can be distributed in a different way either at the same time the content is obtain, or before the content is obtained, or after the content is obtained.

The invention seeks to provide a data distribution system which enables data to be consumed (for example, by being viewed, played, listened to, or otherwise used) in an authorised manner whatever its mode of distribution. The content data is encrypted for distribution but can be used (e.g. viewed) by decrypting in accordance to the usage (e.g. viewing) rights secured for that content. These rights may be provided with the content data but may also be distributed independently of the bulky content data. The distribution scheme seeks to provide a means to track the usage of data as well as a means of generating revenue on a usage basis.

As the distribution of the usage right can be via a completely different communication channel and even to a different device, it is possible that a data using device is not connected to a network. Currently, many DVD players have no internet connectivity and acquiring copyright compliant content is only possible if a user physically possesses the DVD (which contains a copy-protection mechanism). If a user has a DVD at home, they cannot look at that DVD unless they take the physical disc with them to another location.

Data can be distributed over a communications network in a variety of formats, for example, messages, files or streamed content. It is known to encrypt data with a suitable encryption key, and to provide a user with a suitable de-encryption key. This enables encrypted data to be distributed freely as it is not usable until unencrypted. Whatever has the decryption key which is the public key of a private/public key pair is able to verify the source of the encrypted information is the holder of the private key by decrypting the data successfully.

The term data "certificate" refers to data which has been encrypted or signed using a private key. The certificate is then distributed to parties who have been provided with a public key which is paired with the private key. A user who has obtained a public key is able to decrypt the contents of the certificate to verify the source of the data as that of the entity who has the private key in their possession. It is also possible to verify certificates with well-known certificate issuing third parties who are known and trusted.

It is known to provide devices with so called "trusted" identities, by embedding unique code identifiers within the hardware infrastructure of the device or of a component of the device. In this way, a mobile phone has a trusted identity which its subscriber identity module (SIM) card establishes. Similarly, secure memory implemented in silicon is also known in the art, for example, BIOS chipsets are now known to provide unique identities for computationally enabled devices such a computers, laptops, personal digital assistants, and also mobile communications devices, games consoles and trusted computing modules/chips are now being included in phones, PCs and laptops etc.. Merchant service cards (also known as account cards or debit/credit cards) also comprise a secure memory area which is hosted on a portable card infrastructure (plastic) and may also have near-field communications (NFC) or RFID tag (Radio-Frequency Identifier) functional capabilities. Such cards are trusted by means of their use being billable to an account holder who regulates their use and thus the volatile memory strips provided on such cards are associated with the trusted identities of the account holders.

It is known for the use of electronically downloaded data to be restricted so that the data can only be used on the same device to which the data was first delivered to or to a restricted list of devices. In order for a user to use data on multiple devices, even if they only use the data on one device at a time, a user may need to purchase a licence for multiple devices. The present invention seeks to enable data to be used under licence on a number of devices by enabling usage rights to be transferred between devices independently of the device for which the rights were originally acquired. This enables high-storage capacity libraries of content data to be stored at various convenient locations and for a specific item of content to be legitimately consumed only when a content usage right has been secured and made available to a device which has obtained the content when it seeks t o use that content..

Many data and content distribution systems are know in the art, however, these have various limitations on the way in which the data using rights are distributed. The aspects of the invention seek to mitigation and/or obviate some of the limitations of known content distribution schemes by decoupling the distribution of viewing rights from the distribution of the content itself using a data distribution system which enables peer-to-peer device transfer of a data usage right.

### SUMMARY STATEMENTS OF INVENTION

One aspect of the invention seeks to provide a method of transferring data usage rights between two devices: The devices may be portable and the transfer communications protocol may comprises a near-field communications protocol. A transfer between two devices may permanently delete a usage right previously stored on a transferring device following a transfer of the right from the transferring device to the receiving device. A device may store the usage rights but have itself no means to store or use the data to which the rights relate. For example, the transfer may require a user account associated with a merchant service card, for example, a prepay card, or account-based credit/debit card to authorise the transfer. Such a merchant service card has a secure memory area which may be used to enable the data usage right to be transferred to another client device. The transfer process may or may not use a NFC protocol depending on the characteristics of the card and its communications capabilities and those of the rights receiving device (with/without using NFC).

The aspects of the invention are as set out in the accompanying independent claims and the preferred embodiments of the invention are as set out in the accompanying dependent claims and the aspects and preferred embodiments may be combined in any appropriate manner with each other apparent to one of ordinary skill in the art.

The preferred embodiments of the invention will now be described with reference to the accompanying drawings which are by way of example only and in which:
Figure 1 of the accompanying drawings shows a data distribution system according to an embodiment of the invention;
Figures 2A, and 2B shows devices configured to access data distributed according to embodiments of the invention;
Figure 3 shows steps in a method of using data distributed according to an embodiment of the invention;
Figure 4 shows schematically how data usage rights are transferred according to an embodiment of the invention;
Figure 5 shows steps in a method of transferring data usage rights according to an embodiment of the invention;
Figures 6A, 6B show schematically how a device is configured for use in a data distribution system according to an embodiment of the invention;
Figures 7 and 8 shows schematically how a device is configured internally for use according to an embodiment of the invention;
Figures 9a, 9b, and 9c show how the information stored in secure areas on a transferring and a receiving device changes when usage rights are transferred according to an embodiment of the invention;
Figure 10 shows schematically how DUR is transferred from one device to another device according to an embodiment of the invention;
Figure 11 shows how the DUR transferred in Figure 10 between two devices is used to according to an embodiment of the invention; and
Figure 12 shows how a secure session is arranged to enable usage rights to be transferred between two client devices according to an embodiment of the invention.

The best mode of the invention will now be described with reference to the accompanying drawings. In the following description, numerous details are set forth for the purpose of explaining the invention. However, one of ordinary skill in the art will realize that the invention may be practiced without the use of these specific details and that the scope of the invention includes the equivalent use of any functional equivalents of one or more of the specific details recited herein. In other instances, well-known structures, steps and/or devices may be omitted from the description and/or drawings where their inclusion would be apparent to a person of ordinary skill in the art.

The numbering scheme of the elements shown in the accompanying drawings is retained from one figure to the next figure unless specifically mentioned otherwise in the description.

As mentioned above the term "trusted" identities refers to a unique code identifier which is associated with a the device or of a component of the device, for example, the trusted identity which its subscriber identity module (SIM) card establishes. Examples of trusted identities which can be provided in hardware include those unique identities which are stored in secure silicon, including, for example, secure basic input/outputs (BIOS) chipsets and/or secure subscriber identity modules (SIMs) and/or trusted computing modules and/or chips. Trusted identities are either hard (pre-provisioned with the hardware itself, such as that provided by a SIM) or soft (provisioned remotely using an interface to the secure silicon, which enables a server to provision a secure silicon hardware component with a trusted identity by writing the identity into its secure memory area) by establishing a connection with a device which connects the secure silicon to the server over a communications network.

The term "secure silicon" is used as a synecdoche for a "secure environment" such as a SIM chip or other secure silicon or processing module with restricted input/output APIs. The term "secure memory" which refers to an end-user restricted memory area or data store within the secure area of a device for example, a data store housed within a BIOS chipset, or trusted computing modules/chips, or the volatile memory provided on a merchant service card (also known as an account card or debit/credit card). The term "secure silicon" is thus not intended to exclude other materials which are capable of providing equivalent function(s).

A data item comprises "content data". Content is a term known in the art to refer to data or information represented as text, audio, and/or video data which is distributed in electronic form. The content data is distinguishable from the data which provides the generation, distribution, delivery, and playing infrastructure supporting the content as it represents the "played data", although usually the term "content" refers to the collective distributable data entity which is required by a receiving device to enable the received data to be used (a term which refers herein to both active use of data (e.g. playing a game or using a program) and to its passive consumption, e.g., when a video or music file is "played" or "listened to" and when a text or video file is "viewed". Typical examples of audio content are music tracks and songs; typical examples of video content are films and television programs. Interactive programs such as electronic games as well as other computer programs which provide user services may also be considered as "content" data for the purposes of the invention, and a person of ordinary skill in the art will realise that the term "content" data as used herein refers to any data which may be used more than once by an end-user, and as such, can include other types of electronically distributed computer programs. Content data is frequently distributed in an encrypted form and must be de-encrypted before usage by an appropriate device, for example, a media player application running on a client terminal. The term "content" as used herein refers to the "usable" data which is consumed by an end-user either by loading the data into a suitable data "player" or by installing the data itself as a self-consuming application on a client terminal. Consumable data includes content data and refers to any electronically distributable form of data for which repeat usage rights are relevant, however, references to content data should be interpreted as a reference to any form of consumable data unless explicitly exclude by the description. Electronically distributable forms of consumable data include consumable data which can be downloaded over the Internet to a device 12,14 using a world-wide web-browser type of application such as Microsoft Explorer™, Netscape™ or Mozilla Firefox™ for example.

The invention provides a mechanism for distributing data which enables "content" data to be consumed or used by a user, for example, by playing the content data, viewing the content data and/or listening to the content data on a particular device.

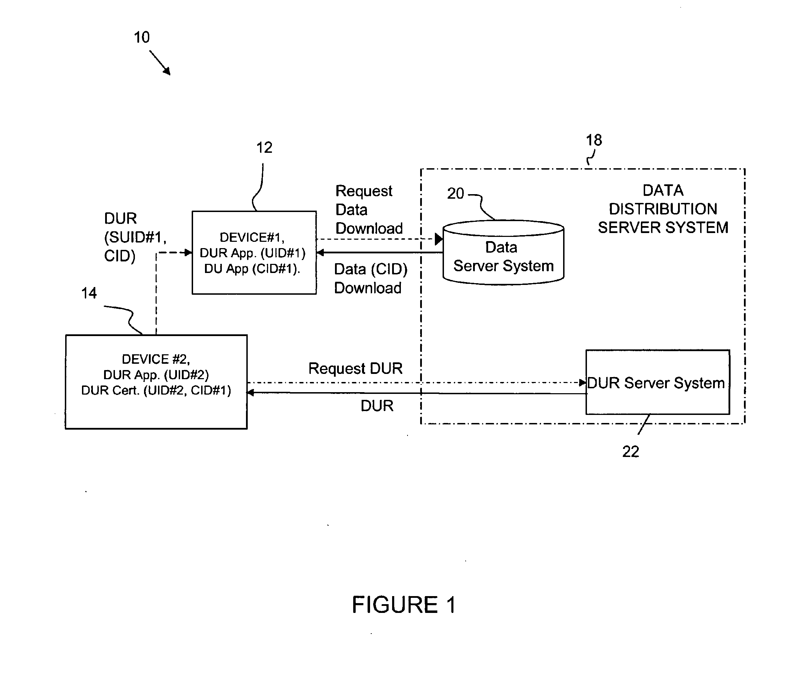

Figure 1 of the accompanying drawings shows a communication system 10 in which a plurality of user-operated client terminal devices (just two 12, 14 are shown in the exemplary embodiment in Figure 1) are shown connecting to a data distribution system 18 which comprises a content data distribution server system 20 and a separate data usage right (DUR) server system 22.

Communication system 10 comprises any suitable communications network infrastructure and devices 12, 14 are suitably configured to utilise the communications system and comprise appropriate components for data communications and associated signal processing, including generic data processing and input/output components. A typical example of a suitable communications system 18 is one which is arranged to support the download of data requested using a web-browser application running on a device 12, 14 which retrieves data from remote servers accessed using the Internet.

The content data distribution server system 20 and separate data usage right server system 22 each have a suitable server configuration for the service coverage they provide. For large service coverage, distributed server configurations may be provided, for example, a peer-to-peer arrangement and/or a server hierarchy may be provided in some embodiments and in some embodiments one or more elements of either or both server systems may be supported by the same hardware platforms

As shown in Figure 1, a device 12 requests data with which is associated a specific data identity (CID#1) from data server system 20 over a communications network (not shown) of communications system 10 using a suitable communications protocol, for example, by sending a hyper-text-transfer-protocol (http) or via a file transfer protocol (ftp), depending on the network connectivity capabilities and/or applications the device is capable of supporting. The data server system 20 processes the request for data CID#1 and the requested data CID#1 is downloaded to requesting data requesting device 12. However, a user of device 12 cannot use or play the downloaded data as it is downloaded in an encoded or encrypted form. In order to use the downloaded data, one or more data usage rights must also be provided to the device on which the user wishes to use the data.

Device 14 is shown in Figure 14 separately requesting data usage rights for data with data identity CID#1 (i.e. for data with the same data identity CID#1 as requested by and downloaded to device 12). The data usage right (DUR) request generated by device 14 is sent to DUR server system 22 in a suitable format known in the art and contains an indication not only of the data identity (CID#1) for which the rights are requested but also of a trusted identity of the requesting device UID#2. The DUR server system 22 processes the request and responds by providing a certificate which grants the requested DUR for data with the identifier CID#1 for use by the trusted identity UID#2.

The UID#2 is a trusted identity associated with the intrinsic operating hardware of device 14 in this embodiment of the invention, although any other suitable mechanism of providing a trusted identity may be used.
The device 12 is suitably configured for communications purposes and supports a suitable remote content data retrieving application, for example, a file-transfer program or web-browsing application such as FireFox™, Netscape™, or Microsoft Explorer™ in one embodiment of the invention. Examples of device 12 comprise, for example, a mobile telephone, laptop computer, personal computer, games console, or any similar device which has a trusted identity associable with an intrinsic hardware component.

As shown in Figure 1, device 14 comprises appropriate hardware components to support the operation of software application such as a web-browser which is arranged to request and receive a certificate for data usage rights (DURs) from a remote DUR server 22, again using a suitable communications network (not shown for clarity in Figure 1).

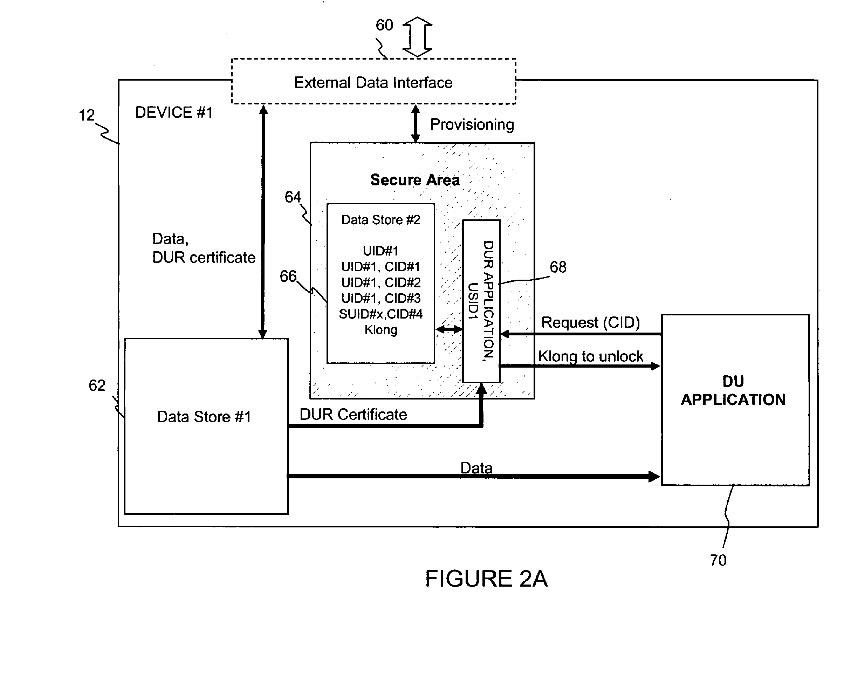

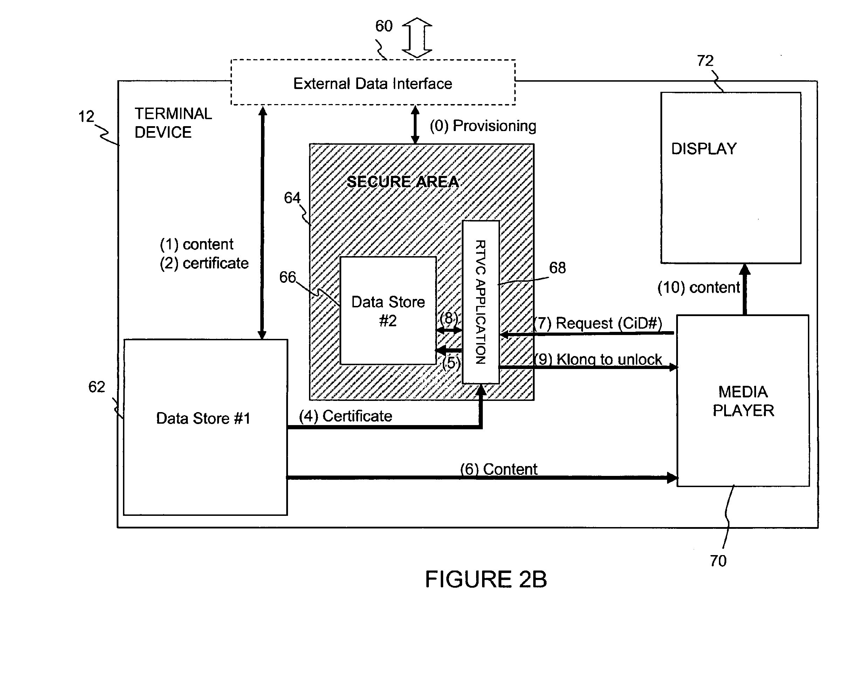

Figures 2A and 2B respectively show schematically a client device suitable for participating in a data distribution scheme according to an embodiment of the invention. Figure 2A shows a device 12 with a generic data using application 70 whereas in Figure 2B shows a device 12 which has a media player 70 and display component 72. Figures 2A and 2B omit some well-known components of devices 12 and show schematically components to the embodiments of the invention for the sake of clarity. As shown in Figure 2, device 12 has comprises an external data interface 60, a data store 62, for example, a hard-disk, internal flash memory, or even an external data storage component. The device 12 further comprises a unique trusted identity which is provisioned to run in a secure environment with which is associated a secure data storage area 66 and operating environment which supports the operation of a data usage rights (DUR) application 68. The secure data storage area 66 and secure operating environment form a secure environment to which a user and any applications or programs running outside the secure area have no or very restricted access which is referred to herein and is shown in Figure 2 as "secure area" 64.

The secure area 64 is end-user restricted to at least the extent that any applications operating within the secure area 64 and/or secure memory 66 are able to maintain a trusted identity.. To achieve this, the secure area has a restricted application programming interfaces (APIs) to limit the access rights to the secure area of applications and programs which operate outside the secure area. One known way of providing a device 12, 14 with trusted behaviour is to associate the device hardware with a unique encryption key which is not known to anyone which effectively provides the device with a unique device identity (UID). Examples of such trusted identity technology includes a secure BIOS identity chipset and other forms of "secure silicon" as well as indirectly trusted technology such as a subscriber identity module on a mobile telephone device, which can uniquely identity a device through the subscriber identity using it.

As shown in Figure 1, DUR application 68 has been installed within the secure area either prior to device 12 being distributed or as a result of a user of the device requesting remote installation from an installation server (not shown in Figure 1). The installation server is suitably configured to access the secure area 64 to provision code capable of installing and enabling execution the DUR application 68 so that it operates within the secure area. The manner in which the remote server accesses the secure area 64 to remotely provision the DUR application 68 will depend on the nature of the client device 12, 14 and the type of secure area 64. One exemplary provisioning scheme where a client device 12, 14 comprises a 3G mobile phone uses the IMS (Internet and Multimedia SubSystem) which is known in the art from 3G mobile standards. A use of the mobile phone establishes a trusted relationship with a Mobile Operator by means of their service contract or through the purchase of a pay-as-you-go mobile device. The mobile device 12, 14 includes a SIM card and runs an IMS client. The mobile operator deploys an IMS (described in more detail in the 3GPP standards) which supports Application Servers (ASs) according to 3GPP terminology which can interface with the SIM cards on a client device. By establishing a secure link between an installation server (the AS) and the SIM card (secure area 64,66) on the client device would allow the DUR application 68 and data (DUR certificates) to be installed and stored on the SIM card (and/or any other secure silicon in the mobile handset). Another exemplary embodiment of a provisioning scheme for installing the DUR application and data on a mobile phone device uses a SIM Application Toolkit (STK) which allows the SIM to initiate actions for various value-added services and enables the SIM to initiate a request for the DUR application to be installed. The SIM Application Toolkit (commonly referred to as STK) is a well-known standard of the GSM system that allows a SIM to initiate actions which can be used for various value-added services. The installation of the DUR application 68 in the secure area 64 also provisions the decryption key Klong for the encrypted content which is stored in the secure area 66 of the secure area 64. An encrypted data item (content) which has been distributed either using the content distribution server 20 shown in Figure 1 or from any other source can only be played if Klong is provided to the data using component and Klong is released by the DUR application in dependence on the DUR application 68 determining that a data usage right for that particular data item (content) is stored in the secure memory 66. Also provided by means of the installation of the DUR application 68 is a public key which enable DUR certificates (which have been encrypted within the DUR sever system 22 with the corresponding private key) to be verified as genuine by DUR application 68. The data distribution server system 18 uses information provided during the installation process of the secure application to associated the secure area 64 of the device 12 with a unique user key or user identifier referred to herein as UID#1. The UID is sent with requests for data usage rights by the DUR application to enable device 12 to be uniquely identified by a DUR server in the DUR server system 22 when granting the rights.

Device 12 is also shown schematically in Figure 2A as comprising a data using component 70, for example, a DU application 70 such as a media player (in which case further appropriate components or output ports/data interfaces may be provided to display any visual media - these are not shown in Figure 2A). Figure 2B shows in more detail an exemplary embodiment of device 12 in which the data using component comprises a media player 70 which provides decoded video content for rendering on display 72.

As shown in Figure 2B, encrypted data associated with a unique data identifier CID#1 is downloaded to device 12 from a data distributing server in the data server system 20 via data interface 60 and stored on data store 62. At some point in time, data usage rights are requested by a user of the device from DUR server system 22. The request is either generated using the DUR application 68 which operates within secure area 64, to which a user is able to specify the identity of the data for which rights are requested either directly or by a suitable associated application which operates, for example, within the context of a web-browsing application as known in the art. The downloaded certificate is shown in Figures 2A and 2B as being stored initially in a non-secure data store 62 as in this embodiment, which may result, for example, if a web-browser application running on device 12 is configured to download data to this memory location. In other embodiments of the invention, however, the certificate is downloaded directly to the secure data store 66. As shown in Figures 2A and 2B, the certificate is subsequently moved into the secure area 64 from the non-secure data store 62.

The request indicates the UID#1 and CID#1 for which data usage rights are sought, and the server processing the request provides in response a certificate encrypted with a private key which details the UID#1, CID#1 and the granted data usage rights. This may involve a transaction between a user of the device 12 either via the device 12 or independently which enables direct or indirect payment to be taken before the DUR server system sends the certificate to the device 12. The DUR application 68 verifies the certificate as genuine using appropriate public key running on device 12.

A data using application 70 which loads the data CID#1 will determine that requires data usage rights must be checked before playback can be commenced (for example by recognising the type of encryption used to encode the data). The DU application 70 then requests a key to enable play back of the encrypted data, referred to herein as Klong, from the DUR application 68 by means of a suitable interface (not shown in Figure 2) which enables the DUR application 70 to communicate appropriately with the DUR application 70 running within the secure area 68. Klong is installed in the secure area 64 and stored in the secure memory 66 when the DUR application shown in Figure 2B as a right to view content (RTVC) application 68 is installed. In response the DUR application 68 checks within a the secure data storage facility to determine if it has already stored there verified data usage rights for UID#1 for using that particular data CID. If not, it may check to determine if some rights have been transferred from another device for that type of data CID, for example, a certificate may have been received by device 12 from another device such as device 14, which contains a sub-user identifier SUID#x for that data CID. If not, then the DUR application is configured to query data store #1 to determine if a suitable certificate for that CID has been downloaded but not yet verified by the DUR application 68. If not, DUR application 68 may prompt a user of the device to obtain a data usage right from the DUR server system 22. In addition and/or alternatively, DUR application 68 or DU application 70 may after a suitable time-out period has expired generate a reject alert, for example, a message which is displayed to indicate the failed check for data usage rights.

If the DUR application 68 locates a suitable verified certificate source of data usage rights for the data the DU application 70 is seeking to play, it releases Klong to the DU application 70 for use in accordance with the terms of those rights. DU application 70 receiving Klong uses it to decrypt the encoded data which enables the data to be used in accordance with the usage rights provided (for example, if the data comprises a music file or a video file, the file is then suitably played either on device 12 or on a peripheral device attached to a suitable output port of device 12).

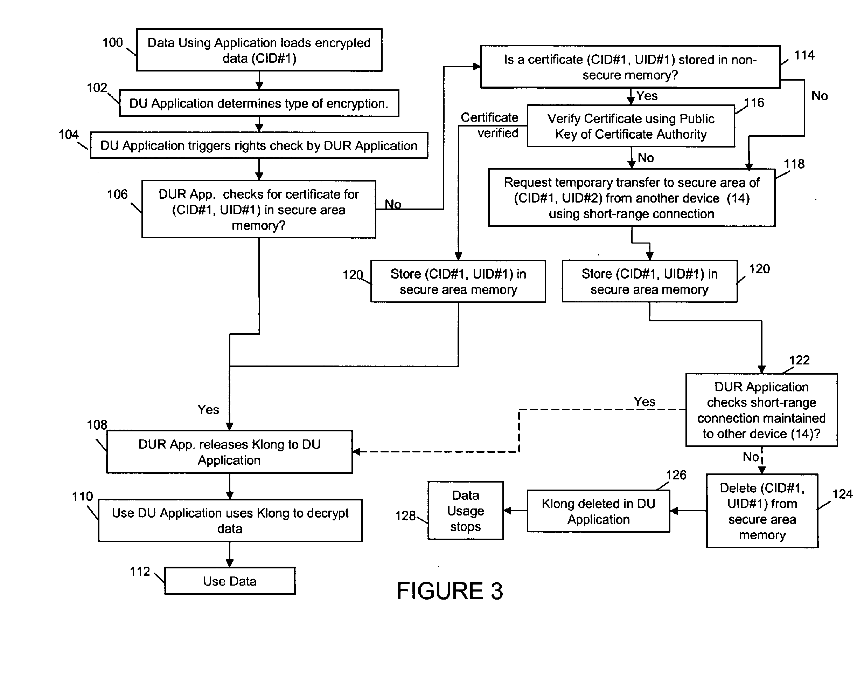

Figure 3 shows schematically steps which are performed in order for a device to use data distributed using an embodiment of a data distribution system 18. In Figure 3, data using application 70 loads the encrypted data CID#1 (step 100). The type of encryption is then determined (step 102) and the DU application 70 triggers a look-up operation which the DUR application 68 performs (step 104), for example by sending a request for a decryption key Klong to decrypt the data to the DUR application 68 over a suitable interface between the DU application/component and the secure area.

In this embodiment, Klong is stored within the secure area 64 and is only released for a limited use in accordance with the data usage rights held in the secure data store 66 for the data CID#1. The DUR application 68 performs a look up operation which checks secure data store 66 for a data record which indicates a verified certificate for that data identifier CID#1 associated with the user identifier UID#1 with which device 12 is associated is held in the data record list of usage rights (step 106). If a verified certificate exists, then the DUR application releases Klong to the DU application 70 (step 108), the DU application then uses Klong to decrypt the data (step 110), and the decrypted data is then usable and may be used by the DU application (step 112).

If a verified certificate is not stored in the secure memory area 64, DUR application 78 queries whether an unverified certificate is stored in another memory location on device 12, for example, non-secure data store 62 (114). If an appropriate certificate for UID#1, CID#1 exists, DUR application 78 verifies the certificate's validity by decrypting it using a public key of a private-/public key pair where the private key is used by the DUR server system 22 to encrypt the certificate (step 116) or by reference to an external certificate authority. In this way, the authenticity of the data usage rights certificate is validated, information extracted from the validated certificate can be then stored in the secure memory area 64 (step 120). Alternatively, if no certificate exits, or if the certificate is not successfully validate, the DUR application 68 is arranged to request a DUR certificate to enable the data to be used by DU application 70. For example, the DUR application 68 may prompt a user to obtain DURs from DUR server system 22 or by means of a transfer of DURs from another device.

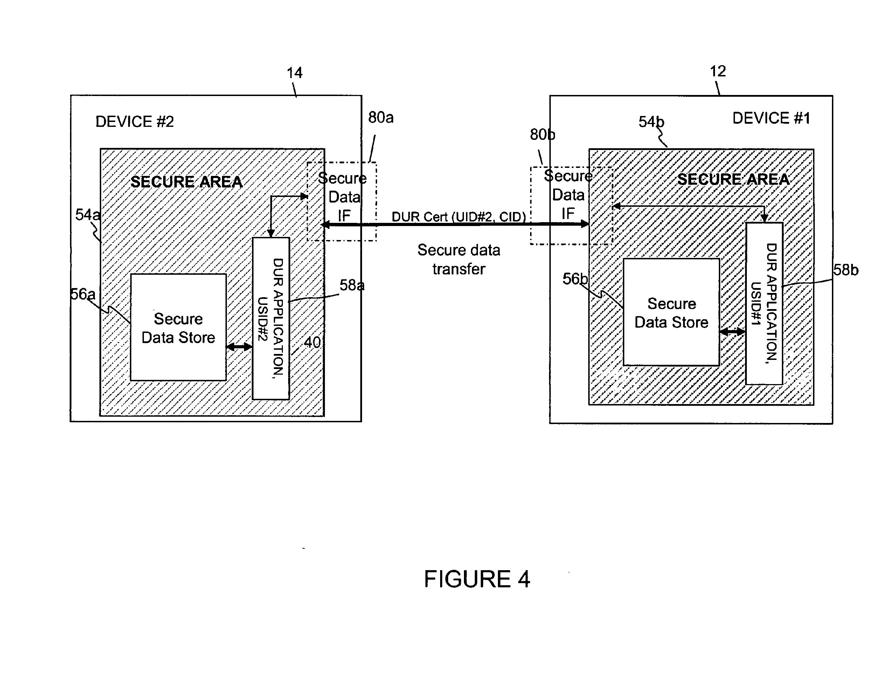

If the user indicates a DUR is to be transferred from another device the device 12 establishes a short range connection with the secure area of the other device. Such a scenario is shown schematically in Figure 4 of the accompanying drawings in which device 12 receives a DUR certificate from another device 14 by establishing a secure data communications channel between the secure areas 54a, 54b of each device. As shown in Figure 4, devices 14, 12 each include a respective secure data interface 80a,80b via which a secure short-range communications link channel is established so that data can be exchanged between the two secure areas 54a, 54b of devices 14, 12. As shown in Figure 4, device 14 is associated with a UID#2 (which is associated with its trusted identity) and device 12 is associated with the UID#1.

Returning now to Figure 3, at step 118 the DUR requests a temporary transfer to the secure area of data usage rights for data CID#1, which are associated with UID#2 (118). The other device 14 transfers a validated certificate pair of rights (CID#1, UID#2). Now before Klong is released to the DU application 70, the DUR application 68 checks that the other device 14 is still connected to device 12, i.e., it performs a proximity check based on the range of the short-range connection between the two devices (step 122). Assuming this connection is maintained with the other device 14, the DUR application 68 of device 12 releases Klong to the DU application 70 on device 12.

However, unlike in the situation where the certificate which released Klong was associated with the UID of the device 12, as the UID is different, the DUR application from time to time that the short-range connection is maintained to the other device 14. In some embodiments of the invention, the secure connection enables a specific time transfer of usage rights which is media sensitive. For example, a 90 min film is watchable under the terms of the usage rights within a 120 minute time-window without any connection being maintained between the devices but after this a further connection is required for viewing. If the connection is maintained, no action is taken. However, if no connection remains, then it deletes the temporarily stored certificate pair CID#1, UID#2 from its records in the secure memory area 66 and causes DU application 70 to stop using the data, for example, by generating a control message which is sent to the DU application causing Klong to be deleted and to stop all use of the data Klong has decrypted. In this way, regardless of whether Klong has been used to decrypted all data prior to any use commencing or whether Klong is used to decrypt streamed content during usage of decrypted content, the DU application 70 will no long be able to use Klong if the other device 14 is not longer within a certain range which the secure connection between the two devices supports.

In one embodiment of the invention, the secure connection is provided by a near-field communications technology, for example, a wireless communications technology which supports connections ranging up to 10 cm or so. Near Field Communication (NFC) is an example of a highfrequency wireless communication technology known in the art to enable devices to exchange data over distances ranging up to 10 cm.

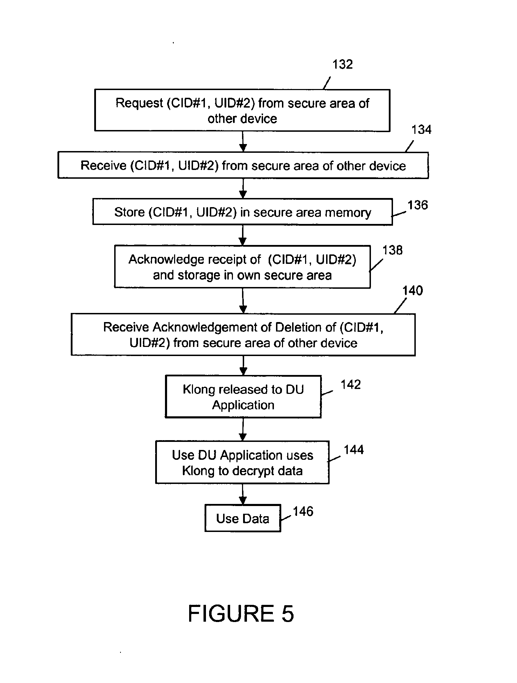

Figure 5 shows an example of how data usage rights can be transferred in an embodiment which removes the requirement that a near-field proximity condition is maintained during data usage. In
Figure 5, device 12 requests a validated certificate from another device (step 132), receives (step 134) and stores the transferred certificate (step 136), and then acknowledges receipt and successful storage to the other device 14 (step 138). Device 14 when it receives the acknowledgement from the other device that the usage rights have been deleted on the other device (step 140), releases Klong to the DU application (142), which then uses Klong to decrypt the data (step 144) enabling use of the decrypted data (step 146).

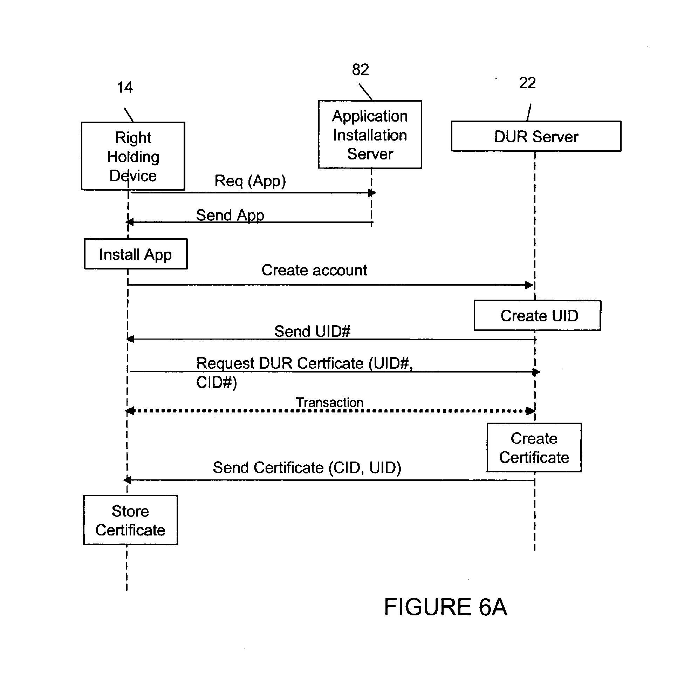

Figure 6A shows schematically a message flow in an embodiment of the invention in which a device 14 is not capable of using itself the data for which usage rights are being obtained. In this embodiment, the rights holding device 14 is capable of being associated with a trusted identity, either intrinsically linked with its hardware infrastructure or capable of being associated with a trusted identity. For example, in one embodiment, rights holding device 14 comprises a credit-card or SIM card in some embodiments of the invention, with which near-field communications can be established. In the embodiment shown in Figure 6a, the rights holding device 14 is not preconfigured with a DUR application 78 in its secure memory area 64. As shown in Figure 6a, device 12 obtains a user identifier UID#1 for participating in the data distribution system 18 by installing a DUR application 78. In this embodiment, the certificate has a very low data volume, which enables it to be stored in any device having a trusted identity. As such, it is possible for the application to be requested and then for this to be sent to be sent to the requesting device which then uses the near-field communications capability of the requesting device to transfer the certificate.. For example, a user may request an account to be set up, in order to store a UID within the secure memory area 64 with which any data usage rights they obtain will be associated. As shown in Figure 6a, device 14 generates a request for installing the application which is sent to an application installation server 82 (which could, for example, be as a result of a user selecting to download the application using a web-browser application). The application server 82 sends the application to device 14 which is downloaded in the normal manner and when installed on device 14 generates DUR application 78 which operates within the secure area 64 using a suitable installation technique to access the secure area 64 known to one of ordinary skill in the art. For example, in one exemplary embodiment already described hereinabove, 3G IMS enables a phone user to establish a trusted relationship with a Mobile Operator by executing a service contract or by transacting for a pay-as-you-go mobile device. The device includes a SIM card and if the device runs an IMS client and the mobile operator deploys an IMS then a DUR server can be run as a 3GPP Application Server (AS) and by establishing a secure communications link between the DUR AS and a mobile device's SIM card enables applications and data to be installed on the SIM card or other secure silicon on the mobile device. In this embodiment, a UID is associated with the user by means of either one or more IMS identifiers and/or in an application specific manner. A transferrable DUR which uses a subuser identifier (USID) is capable of being stored in a HSS (the Home Subscription Server - the 3G database of information associated with each user) or in the IMS. When a user sends an IMS message to a DUR application 68 installation server in the data distribution system, the user's IMS ID has already been validated by the IMS and a simple association of the IMSID to a UID for the data distribution system is established. A secure link is established between the IMS and the secure silicon on which the SIM (for example, a U-SIM or I-SIM) is stored. This is then used to install the rights application and data. Also, as mentioned above, another embodiment installs the DUR application 68 (and also provides Klong etc to the secure area 64) using the GSM SIM Application Toolkit by enabling the SIM to initiate the DUR application 68 as a value-added service.

The installed DUR application 78 then contacts a server in the DUR server system 22 in order to generate a trusted UID for the device by providing the DUR server system with unique identifying information, for example, if the secure area 64 is associated with a trusted identity, then this is sent to a DUR server 22 in one embodiment of the invention which uses this to establish a new UID#1. Alternatively, in one embodiment a user provides unique user identifying information such as a credit-card number, in which case, the DUR may be associated with the credit-card account of that user and this information may be uploaded to that user's account for subsequent transfer to a data using device when the credit-card is in close proximity (described in more detail herein below).

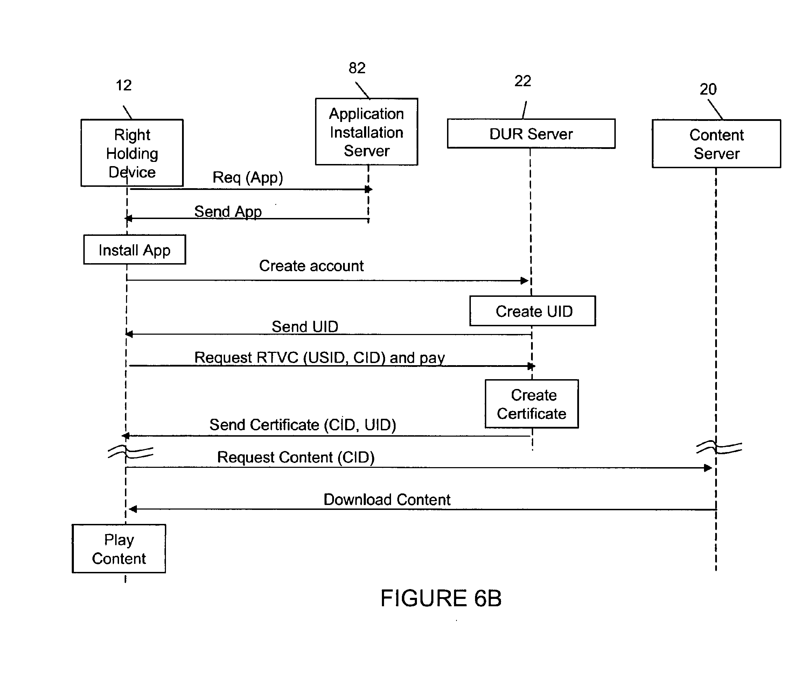

Once a new UID has been generated, the UID is sent to the rights holding device which stores this in secure area 64. When a request for data usage rights is received by the DUR server it examines the UID#1, CID# provided in the request. If the rights are to be released only following a transaction, the DUR waits for this to be completed and then creates a certificate for that UID#, CID# which is then sent to the right holding device 14 which then stores the certificate in non-secure data storage area from where it can be retrieved by a DUR application for verification. Once verified, the DUR application 78 stores the verified CID#, UID# in a secure memory location 64 in a suitable searchable record format, for example, in the form of a look-up table, list or database. Figure 6B shows an embodiment of the invention in which data having the same CID as that of a stored certificate is then downloaded and played on right holding device 12.

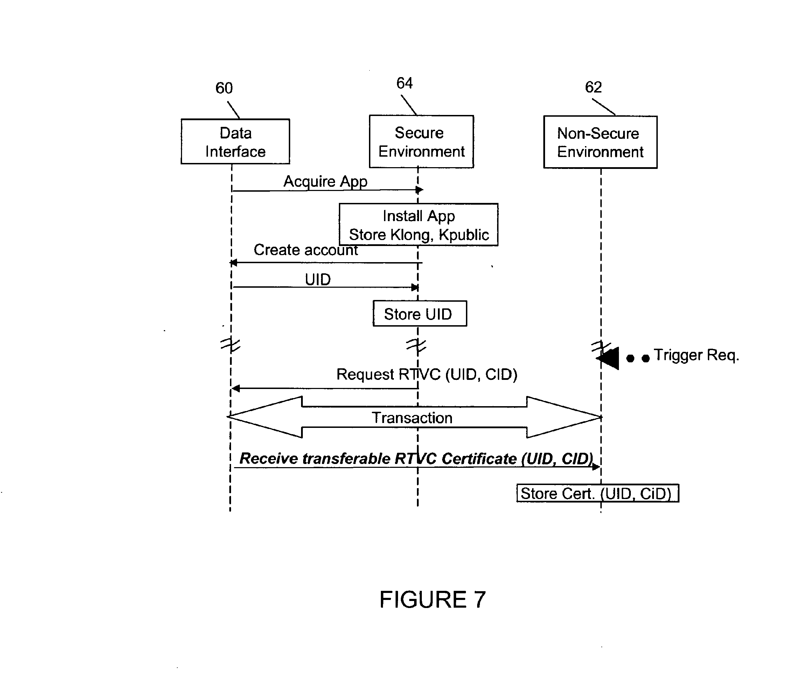

Figure 7 shows the data flow within a device 12 according to an embodiment of the invention in which DUR application 78 is installed within secure area 64. As shown in Figure 7, the device 12 acquires the DUR application 78 through secure data interface 60 and by installing the device is provided with two keys, the first is Klong, the key required to decrypt content. The second is Kpublic, the key required to verify that a certificate for a particular CID#, UID# is valid and genuine. As shown in Figure 7, after the application has been installed, an account is created which associates that particular DUR application with a user account identifier UID which is then stored in the secure area 64 so that it can be included in subsequent requests to use data associated with a particular data identifier CID# which the DUR application sends to the DUR server 22 via data interface 60. After any necessary transaction has completed which may involve the non-secure operating and data storage environment of device 12, an encrypted and/or signed certificate is provided which associates certain usage rights with that particular UID#, CID# pair.

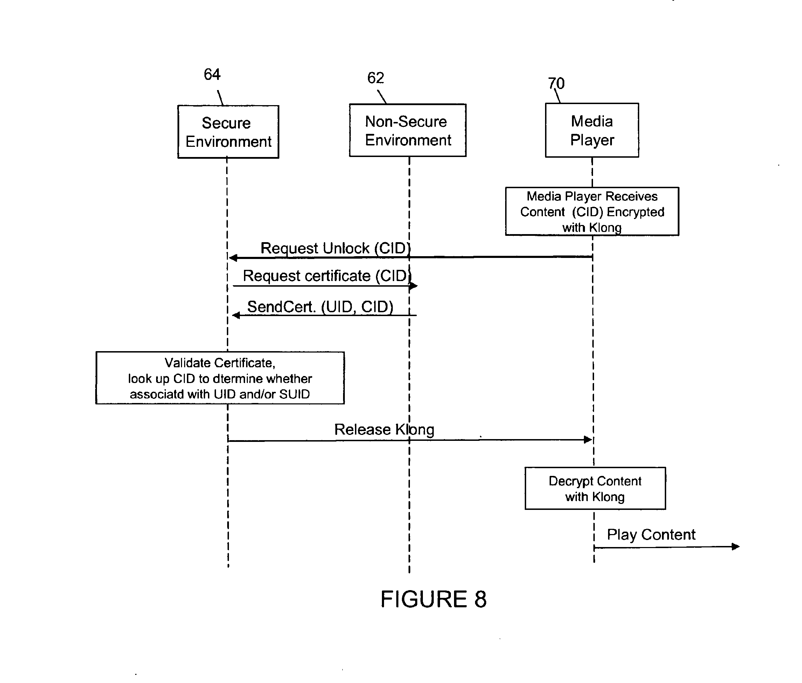

Figure 8 shows schematically an embodiment of the invention in which data using (DU) component 70 comprises a media player. The media player receives content and determines its identifier, CID# and that it has been encrypted with the key Klong. It then generates a request to unlock the content for playback which is sent to the DU application running in the secure area 64 of the playback device. The DU application 70 then requests a certificate from the non-secure data storage area 62. If a certificate is retrieved by DUR application 78, it validates the certificate by using Kpublic to confirm if the certificate contents are genuine. If validated, then the decryption key Klong is released to the media player which decrypts and plays the content.

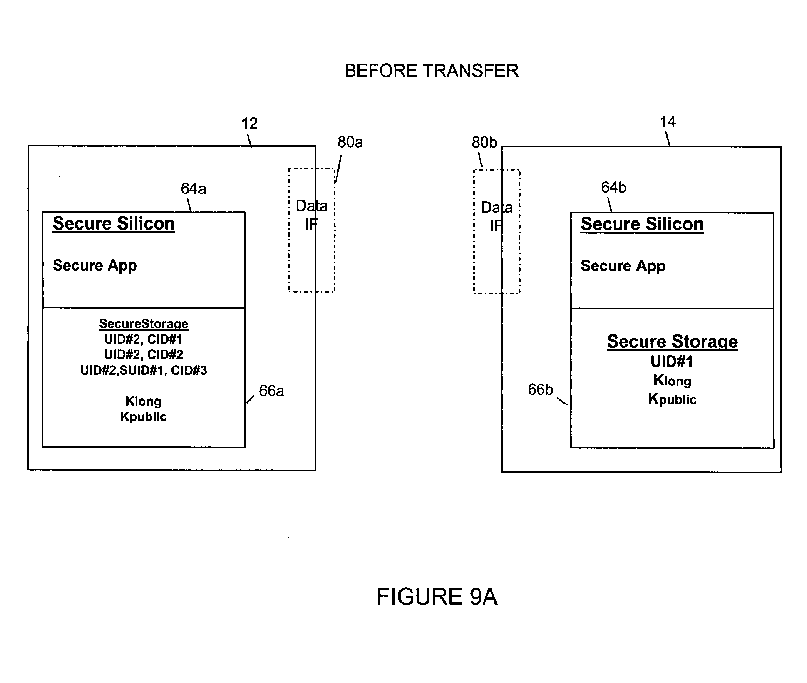

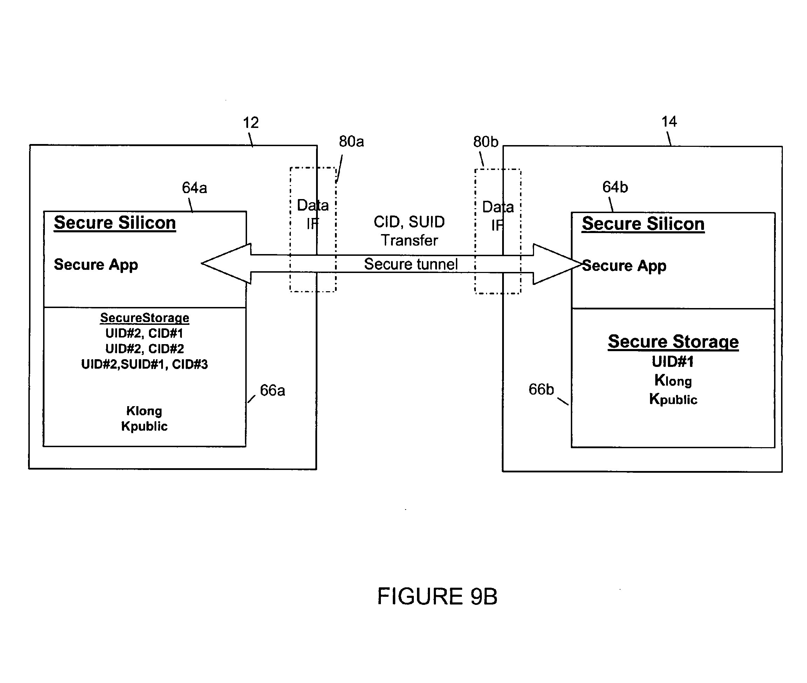

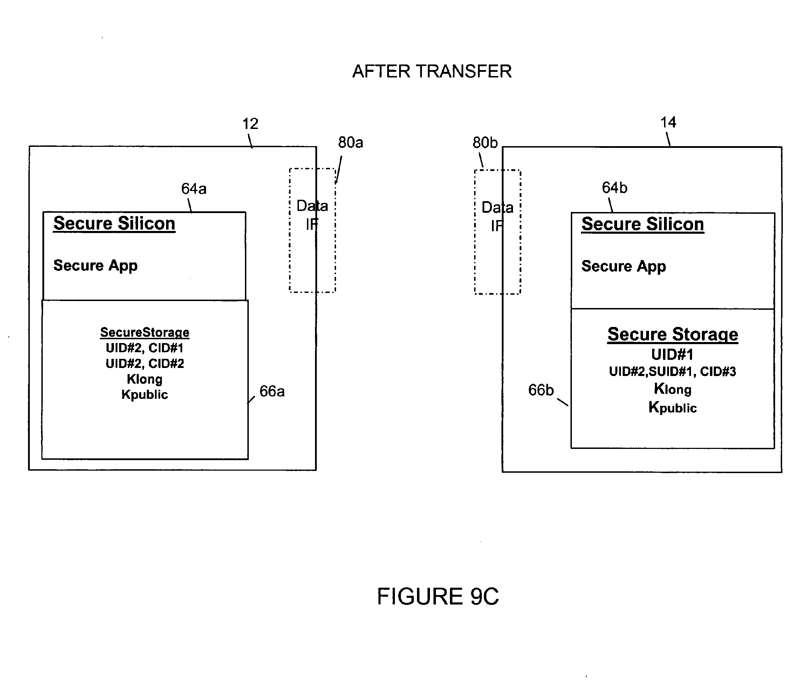

Figures 9a,9b, and 9c show how data usage rights are transferred between two devices according to an embodiment of the invention in which certificates are issued by the DUR server which provide transferrable sub-user rights or SUIDs. A transferrable right certificate according to this embodiment of the invention comprises a tuple of identifiers. One identifier comprises a rights requesting user identifier associated with the device requesting the certificate (UID#), the other is to identify the content data for which the usage rights are being sought (CID#) and the third is a transferrable user identifier, or sub-user identifier SUID.

As shown in the exemplary embodiment of Figure 9A, prior to any certificate transfer, device 14 has four data usage rights entries stored within its secure area 64a. The first two entries are for enabling its own user account identifier UID#2 to use data with the CIDs CID#1, and CID#2. Then it has two entries enabling use of data with the CID#3, which comprises two sub-user identifiers, SUID#1, SUID#2. Also stored on device 14 are Klong and Kpublic. Device 12 also has Klong and Kpublic stored in its secure area which is associated with the user account identifier UID#1.

In Figure 9B, a secure communications link has been established between the two devices. Whilst this may comprise a near-field communications link, in this embodiment as a data usage right is being transferred permanently from device 14 to device 12, the link need only be secure and configurable between the two secure areas of devices 14, 12 so that their secure applications 78a, 78b can communicate with each other through secure data interfaces 80a, 80b. The secure communications link enables the verified UID#2, SUID#1, CID#3 tuple of information and any associated usage restrictions to be transferred directly into the secure area of device 12, which eliminates the need for the device 12 to perform a validation check. If device 12 locate a tuple entry in its secure area 64b when performing a lookup operation for data usage rights for data with CID#3 in response to receiving a request from a data using application 70b, it matches the CID#3 of the request to that of the stored tuple and this now triggers Klong to be released to DU application 70. In one embodiment, The transferring device 14 is configured to automatically delete its stored verified entry for UID#2, SUID#1, CID#3 which is now only stored on device 12. In an alternative embodiment the transferring device 14 keeps a (negative) record of UID#2, SUID#1, CID#3 so that it has recorded in its secure area that the right has been transferred so that if device 14 is subsequently presented with a valid certificate (UID#2, USID#2, CID#3) it will reject a request to unlock the CID#3 content. As previously described hereinabove, the step of deleting the entry on the transferring device 14 may be triggered only after the receiving device has acknowledged a successful transfer and/or after a suitable time-out period.

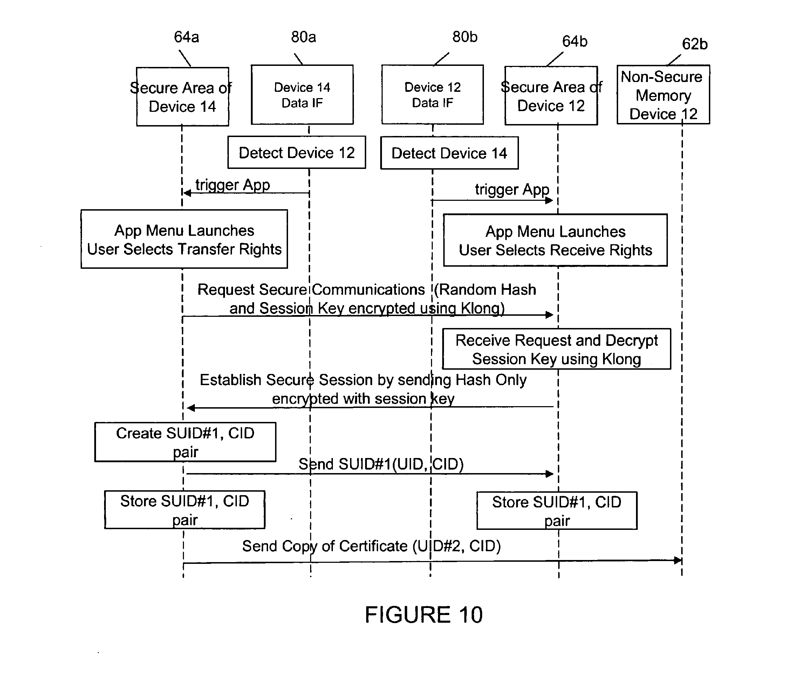

Figure 10 shows the message flow between various components of the transferring device 14 and the receiving device 12 in an embodiment according to the invention. In Figure 10, another embodiment of the invention is shown in which data usage rights are transferred between two devices. In Figure 10, the transferring device 14 detects the presence of device 12 and device 12 detects the presence of device 14 using a suitable proximity function, for example, the presence of the other devices may be detected if each device is listening for broadcast messages and if each device broadcasts messages. Alternatively, any known mechanism and/or technology for enabling the devices to recognise the presence of each other may be provided. As shown in Figure 10, the detection of another device triggers the operation of the DUR applications 78 on each device's secure area 64, which launch a menu type of user interface to enable a user to indicate a rights transfer mode as either receiving (as, for example, would be the case for receiving device 12) or sending (which would be the case for the transferring device 14). A secure communication session is then established between the two devices. DUR application 78a requests secure communications by sending a communications request through its secure data interface 80a and through that of the receiving device secure interface 80b to the DUR application 78b of receiving device 12. The DUR application 78b of receiving device 12 processes the request, and decrypts the session key using Klong, and responds by sending a hash only encrypted with the session key to the DUR application 78a of device 14. This then creates a sub-user USID and CID data pair which is provided in a secure manner to the DUR application of device 12, which stores this information directly in its secure memory area. In this embodiment, a copy of an unvalidated certificate for UID#2, CID#1 is then sent to device 12.

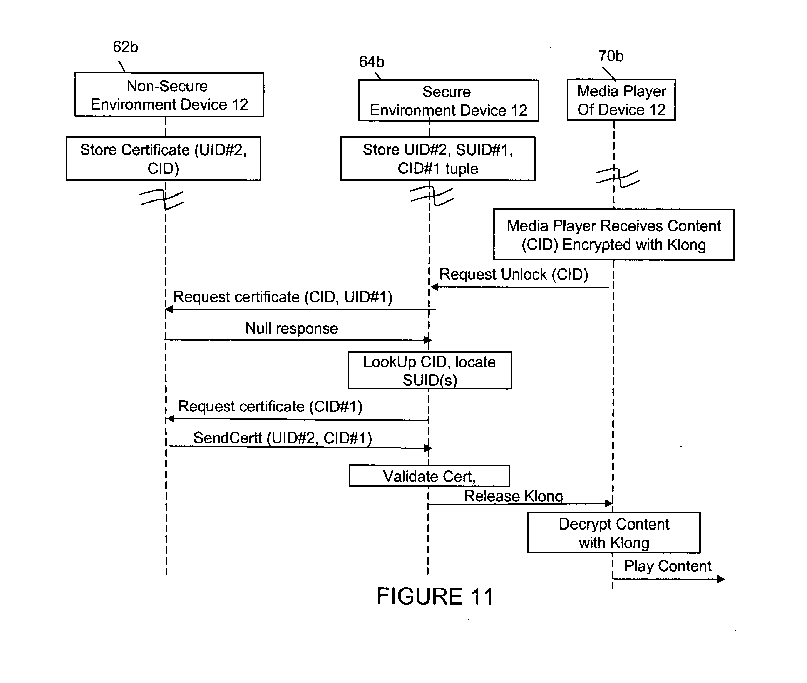

Figure 11 shows how this certificate for the UID#2 of device 14 is then stored by device 12, for example, in a non-secure memory location such as on a hard-disk, or on a removable memory means such as a CD-ROM, DVD, flash memory device etc. At some subsequent point in time, the media player 70b loads content with the CID#1. It then requests Klong to unlock that content from the DUR application 78. The DUR application 78 performs a look-up for the UID#1, CID#1 in its secure area which obtains a null response. It then attempts to find a certificate for CID#1, UID#1 from its non-secure area which also obtains a null response. It then performs a lookup operation for just the CID#1 and locates the SUID#1. It then locates the certificate for the CID#1 which is associated with UID#2. This certificate is then validated. In one embodiment this is done by determining that a SUID is held in the secure area 64b for that same CID#1 which is associable with the UID#1 by device 12. Alternatively, the SUID#1, CID#1 information can be sent with the UID#2, CID#1 certificate to a remote DUR server 22 for validation (by checking that the identifier SUID#1 was in fact issued to that UID#2 for CID#1, in response to which the DUR server provides a certificate for the same CID#1 but now associated with UID#1, which the device 12 can then validate and store within its secure area 64 for use. The DUR server is informed of the validation by a secure communications channel which device 14 establishes which need not be contemporaneous with the transfer. For example, the DUR server 22 is provided with this information the next time the device 14 requests a right from the DUR server in one embodiment of the invention. Once the rights are validated by the DUR application 78, Klong is released to the data using application, shown in Figure 11 as media player 70b of device 12.

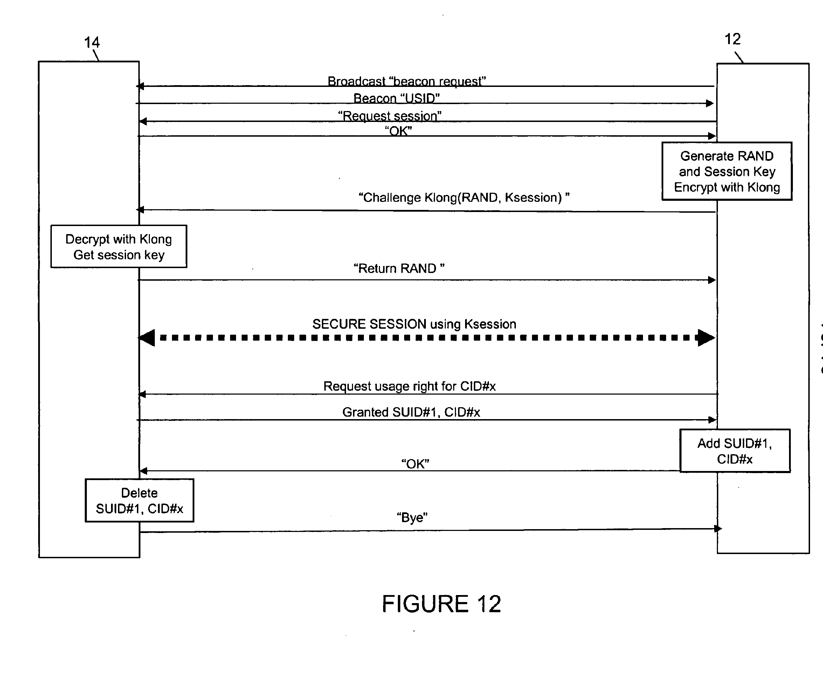

Figure 12 shows the message flow in an exemplary rights transfer communications protocol between two client terminal devices according to an embodiment of the invention. In Figure 12, the two devices establish a secure session to transfer a SUID from one device to the other device using a near-field communications technique. In Figure 12, device 14 transfers a DUR by providing a SUID to device 12. The DUR application 68 on device 12 generates a beacon request signal which is broadcast using a near-field communications protocol to locate another near-field communications enabled device nearby. The beacon request generated by device 12 is shown in Figure 12 as being detected by device 14. Device 14 responds with its UID, and device 12 then responds with a session request.

In one embodiment of the invention in which device 14 comprises a mobile phone, the device 14 is configured by user preference to transfer music or videos to another device when a suitably configured device is set within range. In this embodiment, if the mobile phone has a NFC data interface, then by waving the mobile phone within the NFC data transfer range with another device, for example, a music media player such as a CD player or HiFi unit etc, a menu appears on the mobile phone screen which offers the user a temporary or permanent transfer of a right to play one the other device one or more songs the user has acquired DURs for (this assumes the other device has access to the encrypted versions of the songs for which the user has acquired DURs). The right is then transferred to a secure area associated with the operating system of the other device. This enables a DUR certificate to be provided as a "gift" for the data usage to another device by permanently transferring the right to the other device.

Device 14 accepts the session request and the DUR application 68 on device 12 then generates a session key and sends a challenge message to device 14 encrypted using Klong which contains a suitable session identifier, for example, a randomly or pseudo-randomly generated number (RAND) and a session key Ksession. Device 14 then uses its own securely stored copy of Klong to decrypt the received challenge message. This provides device 14 with the session identifier and device 14 then returns the unencrypted session identifier (RAND) to device 12 to authenticate that it has a copy of Klong. Then both of the devices 12, 14 use the session key Ksession (which is not transmitted in the clear) to encrypt communications and enable the SUID to be transferred from device 14 to device 12. The device 12 requests a sub-user right for content with a content identifier CID#x. The device 14 provides SUID#1, for CID#x and the DUR application 68 running on device 12 stores the SUID#1, CID#x within its own list of DURs within the secure memory data storage area on device 12 and sends back an acknowledgement to device 14. In one embodiment, once the receiving device 12 has acknowledged the transfer, device 14 deletes its entry for SUID#1, CID#x from its secure memory data store for its DUR application 68. In a preferred embodiment, however, once the receiving device 12 has acknowledged the transfer, device 14 records a negative entry for SUID#1, CID#x from its secure memory data store for its DUR application 68. In this embodiment, even if a valid DUR certificate (USID#2, CID#x) is presented subsequently to device 14 it has a record that the DUR has been transferred and that the right has been revoked. The session is then terminated. Those of ordinary skill in the art will appreciate that it is also possible for the rights to be pushed to another device by the transferring device as opposed to the right receiving device requesting a rights transfer and/or that the above steps may not necessarily have to occur in exactly the above order and/or that one or more of the above steps may be omitted in some embodiments of the invention.

As mentioned above, in one embodiment of the invention, a certificate is capable of being copied or transferred between devices. As the certificate can be copied freely, any suitable data transfer scheme known to those of ordinary skill in the art can be used, including file transfer protocols such as ftp, and messaging services such as email, or by networking the two terminals in an appropriate manner to enable the other device to access the relevant directory where the certificate is held. Klong is only released if a validated certificate contains a UID# stored in the secure memory of the device which is to release Klong to a data using application.

In a one embodiment of the invention, any transfer between devices is achieved using a short-range secure communications channel is established between the two devices. For example, in embodiments of the invention in which communications link 48 comprises a short range wireless communications link, a secure channel could be established using a near-field communications (NFC) link, BlueTooth™ connection although any other suitable short-range high frequency wireless communications technology enabling data to be securely exchanged between devices. The range of the communications technology provides in this way a proximity condition for temporary rights transfer to take place, for example, if a proximity distance between two devices is set as 10 centimeters, then if the transferring device and receiving device are up to 10 centimeters apart, the receiving device can use data for a temporary DUR provided by the transferring device.. Alternatively, a longer range connection can be used, for example, a WiFI or cellular mobile communications connection can be established which enables a longer proximity condition to be set. The proximity condition which is to be satisfied for the receiving device to release Klong may be set as a once only proximity condition, or as a condition which is verified either continuous or from time to time. Where the proximity condition is not a one-time condition but has an on-going effect, the DUR receiving device is configured to cease data usage if the proximity condition is found not satisfied within the period of its on-going effect. The user of either the transferring or receiving device, or a DUR service provider or content generator may set the proximity condition and this proximity condition may be communicated to devices by means of the DUR certificate which is obtained for particular data.
Those of ordinary skill in the art will find apparent that may modifications of the above elements of the invention are possible and the scope of the invention intends to include any modifications to the described elements which are apparent to those of ordinary skill in the art, including functional equivalents of the features described in the above embodiments.

For example, in one embodiment, if a device 12 which is to receive data usage rights has a smart card reader functionality , then a debit or credit card having a smart chip and which was used in a transaction to purchase a DUR may be read by a smart card reader of the device 12 client terminal when being used purchase a DUR during the transaction stages shown in Figures 6A and 7. The certificate storing the CID#, UID# (and SUID# if used) is stored in this embodiment in the secure memory area of the credit card and transferred when the credit card is read by the smart card reader of the rights receiving device 12.

In another embodiment, a user of a pay as you go (PAYG) mobile telephone, which may or may not be registered to that particular user by the service provider is able to purchase an audio file such as a music track. To play the audio file a user key is stored in the SIM card of the phone. The SIM card is then read by another device using a near field communication (NFC) wireless communication technology, which enables the exchange of data between devices over about a 10 centimetre distance, or other proximity-card standard that combines the interface of a smart card and a reader into a single device, or any other contactless technology well known in the art, for example, those such as the Oyster™ cards which are known for use in the London metropolitan area for transport purposes.

A right-holding device thus needs to have only a mechanism of storing the certificate information s well as a means of identification, and need not be used directly to communicate with the DUR server 22 or use the data for which the certificate has been obtained. Instead, it is a means of securely transferring rights obtained between other data-using devices. In the case of a credit-card, the DUR certificate can be uploaded to memory on the device when it is next inserted in a automatic teller machine. Alternatively, if the device receiving the rights can verify the identity of the credit-card, it can then use this information to determine if remotely associated with that credit-card account is a certificate for a particular data CID# and use this to release Klong.

The certificate containing the DUR for a UID and CID (and option SUID) also contains an indication of any restrictions on the release of Klong for that CID#. After Klong has been released, it is deleted by the data using application 70 automatically in accordance with the restrictions the DUR application 78 indicates are imposed to the DU application. Klong is only provided to trusted data using components/applications (for example, media players) which are configured to hading DRM information and keys securely (for example, such as Microsoft™ Media Player). Such trusted data using components/applications may either receive a one-time use only version of a Klong, which cannot be used more than once so that repeat plays of a particular data item require repeat requests to be sent to the DUR application 68 by the data using component/application. Alternatively, the trusted data using component may simply be configurable to cease use of a Klong in accordance with the DURs provided by the DUR certificate. In one embodiment, instead of releasing Klong, Klong is only made available for use in accordance with conditions which the DUR application 68 communicates to the data using component/application. In another embodiment, a particular DUR is associated with a particular form of Klong (in which case, for example, a one-time only play Klong be provided in a form which is different from a play unlimited times Klong to ensure it is only used once). Alternatively, in one embodiment the content data (or one or more data segments within the content data such as key video frames) are specially encrypted with one or more keys additional to the Klong key. The additional keys are always stored in the secure area 64 and the specially encrypted data segments are passed into the secure area for decryption.

In one embodiment of the invention, a data using application 70 is configured to stream encrypted data through the secure area 64 where it is decrypted using Klong by the DUR application 78. In another embodiment of the invention, Klong is released in a form which allows partial usage of encrypted data even no DUR certificate has been validated on the data using device, which enables a "preview" of encrypted data on a device.

In one embodiment, an encrypted key Klong is provided to decrypt content which is accessible to the DU application. The encrypted key Klong is activated by the DUR releasing another decryption key Kactivate, which decrypts Klong.

The DUR application 78 described in the above embodiments may include a component which operates outside the secure area 64 which interfaces with a web-browsing application operating on a device from which a user is seeking to obtain data usage rights.

It is possible to transfer rights to a device which has no internet communications capability in one embodiment of the invention as usage rights can be transferred simply by holding another device in close proximity to the data using device.

It is possible to transfer rights to a device which has no internet communications capability in one embodiment of the invention as usage rights can be transferred simply by ensuring rights are deleted from one device when transferred to another device.

It is possible to distribute rights simply using a UID if usage is to delete an account associated with that UID in one embodiment of the invention. In this embodiment, Klong is released by a DUR application 78 to a data using application 70 on a device if the DUR application 78 is capable of determining whether sufficient funds are held in the account for the request use of that particular CID for the UID associated with that particular device on which the DUR 78 is operating.

The invention thus provides a means of transferring the right to use consumerable data which is independent of distributing the consumerable data. It enables a user to view a film in a hotel room or at a friends house, for example, if that film is stored at those locations, but only if the user has the DUR for that film and can verify by the DUR presence in a secure area 66 of a device the user holds. If say, the user transfers a DUR (temporarily or permanently) to a device at the friends house, then device release Klong and the film can be watched. In this way, data can be distributed without download restrictions, but can only be consumed if usage rights have been appropriately obtained.

The invention may also seek to provide a method of controlling the use of electronically distributed data by a data using device comprising:
i) distributing encrypted data associated with a data identifier to at least one data using device, wherein the data using device is configured to decrypt the data if it has stored in a secure data area of the device a validated data usage right entry which associates the data identifier with a unique trusted identifier associated with the data using device.

The unique trusted identifier may comprise a user account identifier derived from a trusted identifier embedded in a hardware component of said data using device.

The invention may also seek to provide a method of distributing data usage rights for use in controlling the usage of electronically distributed data comprising:
i) obtaining a data usage right for the electronically distributed data, the right associating a data identifier with a user account identifier;
ii) storing the data usage right in a secure memory associated with said user account identifier;
iii) transferring the data usage right to a data using device by providing the data using device with access to said user account identifier if said user account identifier is verified by the data using device has having been associated with said data identifier.

The data usage right may be verified using near-field communications, by providing the data using device with access to a device hosting said secure memory associated with said user account identifier.

The data usage right may be verified using a communications system, by providing the data using device with access to a remote server which hosts user account identifiers in association with data usage rights.

The secure memory may be provided by a non-volatile memory strip on a merchant service card , for example, an account card or credit/debit card with a suitable data interface such as one supported by a near field communications capability.
The secure memory may be provided on a subscriber identity module (SIM).

The data using device may be configured to decrypt the data only if a device holding the secure memory storing the data usage right is determined to satisfy proximity condition in relation to the data using device.

The invention may also provide a method of controlling the use of electronically distributed data by a data using device comprising:
distributing the encrypted data associated with a data identifier to at least one data using device,
wherein the data using device is configured to decrypt the data only if another device which has obtained a data usage right for that data is determined to satisfy proximity condition in relation to the data using device.

The proximity condition may be verified as being satisfied during the period of data usage.

The proximity condition may be verified as being satisfied prior to the period of data usage.

A device may be provided by an aspect of the invention which is arranged to provide a usage right enabling usage of encrypted electronically distributed data by another device not having a usage right for said content data, the device comprising:
a secure data storage area arranged to store at least one data usage right associating content data having a content identifier with a trusted user identifier and right and at least one subuser usage right;
means to detect said another device satisfies a proximity condition; and
means to transfer said usage right to said other device in dependence on said proximity condition.

A data distribution system may be provided by an aspect of the invention which comprises:
a first device arranged to obtain a data usage right enabling usage of encrypted electronically distributed data by a device associated with a trusted identifier;
a second device arranged to receive a data usage right from said first device, wherein the first device is arranged to provide the usage right enabling usage of encrypted electronically distributed content data by said another device not having a usage right for said content data,
   and wherein each device comprises:
a secure memory area arranged to store data comprising at least one data usage right for content data having a content identifier associated with a trusted identifier for the device and zero or more transferred usage rights for content data having a content identifier associated with a different trusted identifier, wherein each said transferred usage right has been transferred from a device having a said different trusted identifier; and
means to detect if another device satisfies a proximity condition, and
wherein said first device comprises means to transfer one or more of its usage rights to said second device in dependence on said proximity condition being satisfied; and
said second device comprises means to receive a transferred usage right from said first device.

If said proximity condition is not verified as being satisfied during the period of data usage, said the usage right is deleted from said data using device and said second device terminates said data usage.

The invention may seek to provide a device which is arranged to verify a usage right exists in its secure memory, the usage right enabling usage of electronically distributed data, prior to usage of the electronically distributed data, the device comprising:
a secure data storage area arranged to store at least one data usage right associating content data having a content identifier with a trusted user identifier and right;
means to determine if a usage right is stored in said secure memory prior to using said content data;
means to request a usage right is transferred from another device if a said usage right is not present in said secure memory.

The secure memory area may be further arranged to store said transferred usage right for content data having a content identifier associated with a different trusted identifier, said transferred usage rights having being transferred from the device having said different trusted identifier.

The memory area may be arranged to temporarily store a transferred usage right received from another device satisfying a proximity condition to said device.

The transferred usage right may be deleted from said secure memory area if said proximity condition is not maintained during said device's usage of said content data.

## Claims

1. A data distribution system for electronically distributing data usage rights to control the use of the electronically distributed encrypted content data by a data using device, the system comprising:
first distribution means arranged to distribute encrypted data comprising consumerable content in association with a content identifier to at least one data using device;
second distribution means arranged to provide a data usage right for usage of said encrypted content data, the data usage right data associating said content identifier with a use identifier; and
one or more devices, at least one device comprising a data using device which is arranged to obtain encrypted content data distributed by said first distribution means,
wherein each device further comprises a secure memory and means arranged to obtain a said data usage right for encrypted data having a content identifier and means to store an obtained data usage right in a secure memory location,
wherein each said at least one data using device is configured to use encrypted data by decrypting the encrypted data after verifying a data usage right which associates a content identifier for encrypted data with a use identifier for said data using device is stored in a secure memory location of said data using device.

2. A system as claimed in claim 1, wherein said use identifier is derived from a trusted identifier embedded in a hardware component of said data using device.

3. A system as claimed in claim 1, wherein said use identifier is derived from a trusted user identifier associated with a user of said data using device.

4. A system as claimed in any previous claim, wherein a said data using device is configured to decrypt the data using a decryption key stored in a secure memory location of said device.

5. A system as claimed in claim 4, wherein said decryption key is released from said secure memory location to a data using component of said device located in a non-secure location in dependence on the presence on said device of said data usage right being verified.

6. A system as claimed in claim 4, wherein said electronically distributed data is provided to an application running in a secure location of said device, said application being configured to access to said secure memory locations, whereby said application decrypts said data and streams decrypted data to a data using component of said device.

7. A device arranged to obtain an electronically distributed data usage right to control usage of electronically distributed encrypted data comprising consumerable content, the method comprising:
means to obtain data comprising a said data usage right for the encrypted data, the right associating a data identifier for said encrypted data with a use identifier;
a secure memory arranged to store an obtained data usage right, the secure memory being associated with said use identifier;
means arranged to control the release of a decryption key for decrypting said encrypted data by verifying a valid data usage right is held in said secure memory which associates a data identifier of the encrypted data with a use identifier for the device storing the data usage right.

8. A device as claimed in claim 7, wherein said device is configured to release a decryption key from said secure memory to a component of said device arranged to use said data if a said right is verified as stored in said secure memory, wherein if a usage condition set by said verified data usage right is subsequently found not satisfied, said decryption key is made unavailable and said data is no longer available for use by said component.

9. A device as claimed in any one of previous claims 7 to 8, wherein the secure memory location is provided on merchant service card, said data usage right is stored in said secure memory location following a transaction involving said merchant service card, and said use identifier is derived from a trusted identifier associated with said merchant service card.

10. A device as claimed in any one of previous claims 7 to 8, wherein the device comprises a communications-enable device associated with a subscriber identity module (SIM), said secure memory location is provided on said subscriber identity module (SIM) of said communications device, and said use identifier is derived from a trusted identifier associated with said subscriber identity module.

11. A method of data distribution for electronically distributing data usage rights to control the use of the electronically distributed encrypted data comprising consumerable content by a data using device, the method comprising:
distributing encrypted content data in association with a content identifier to at least one data using device;
distributing a data usage right for usage of said encrypted content data, the data usage right data associating said content identifier with a use identifier,
wherein on at least one data using device which is arranged to obtain encrypted content data distributed by said first distribution means, and which comprises a secure memory, and wherein the method further comprises the device:
obtaining a said data usage right for said encrypted data having a content identifier; and
storing an obtained data usage right in a secure memory location on said device; and,
verifying a data usage right which associates a content identifier for the encrypted data with a use identifier for said data using device is stored in a secure memory location of said data using device, wherein if a said data usage right is verified successfully by a device, the device is configured to release a decryption key to enable decryption of said encrypted data.
